# EUROPEAN PATENT APPLICATION

(11) **EP 4 683 036 A1**
(43) Date of publication of application: **21.01.2026**
(21) Application number: 23934556.4
(22) Date of filing: 27.04.2023
(51) Int. Cl.: H01M 10/44, H02J 7/00, H01M 10/42

(54) **CHARGING METHOD AND APPARATUS, ELECTRONIC DEVICE, AND COMPUTER-READABLE STORAGE MEDIUM**

(71) Applicant: Contemporary Amperex Technology Co., Limited, Ningde, Fujian 352100 (CN)
(72) Inventor: JI, Cheng, Ningde, Fujian 352100 (CN); LI, Baiqing, Ningde, Fujian 352100 (CN)
(74) Representative: Gong, Jinping
(86) International application number: PCT/CN2023/091303
(87) International publication number: WO 2024/221360

(57) **Abstract**

This application discloses a charging method and apparatus, an electronic device, and a computer-readable storage medium, where the method includes: charging a secondary battery; and under a condition that a battery voltage of the secondary battery reaches a first cutoff voltage, performing constant-voltage charging on the secondary battery, and terminating the constant-voltage charging when a charging current of the secondary current reaches a target current; where the target current is greater than a first current, and the first current refers to a current at which a capacity of the secondary battery reaches a fully charged state during constant-voltage charging. A positive electrode active material of the secondary battery includes LiMPO₄, where M includes Mn and Fe elements.

## Description

### TECHNICAL FIELD

This application relates to the field of battery charging technology, specifically to a charging method and apparatus, an electronic device, and a computer-readable storage medium.

### BACKGROUND

With the characteristics such as high capacity, high energy density, excellent charge-discharge cycling performance, and the ability to maintain rated output over a long period, lithium-ion secondary batteries have been widely applied in energy storage power systems such as hydroelectric, thermal, wind, and solar power stations, as well as in electric tools, electric bicycles, electric motorcycles, electric vehicles, military equipment, aerospace, and various other fields.

Currently, lithium batteries using lithium manganese iron phosphate as the positive electrode active material in the positive electrode plate are widely used due to their advantage of high capacity. However, lithium manganese iron phosphate batteries have the drawback of requiring an excessively long charging time to reach a fully charged state, failing to meet the demand for fast battery charging.

### SUMMARY

In view of the above problem, this application provides a charging method and apparatus, an electronic device, and a computer-readable storage medium, which can resolve the problem that lithium manganese iron phosphate batteries have the drawback of requiring an excessively long charging time to reach a fully charged state and thus fails to meet the demand for fast battery charging.

According to a first aspect, this application provides a charging method, where the method includes: charging a secondary battery; and under a condition that a battery voltage of the secondary battery reaches a first cutoff voltage, performing constant-voltage charging on the secondary battery, and terminating the constant-voltage charging when a charging current of the secondary battery reaches a target current; where the target current is greater than a first current, the first current refers to a current at which a capacity of the secondary battery reaches a fully charged state during constant-voltage charging, and a corresponding battery capacity difference between the target current and the first current falls within a preset capacity difference range. A positive electrode active material of the secondary battery includes LiMPO₄, where M includes Mn and Fe elements.

In the technical solution of this embodiment of this application, due to a low lithium deintercalation speed of a lithium manganese iron phosphate battery, many lithium ions are not completely deintercalated when a cell reaches an upper voltage limit. Therefore, constant-voltage charging is required to fully deintercalate the remaining lithium ions, thereby fully utilizing capacity advantage of the material. However, the kinetic performance of a second plateau of the lithium manganese iron phosphate battery is poorer compared to that of a conventional-system battery, so that a time for performing constant-voltage charging on the lithium manganese iron phosphate to reach a cutoff current is significantly longer than that of the conventional-system battery. Therefore, this solution provides a design in which constant-voltage charging is performed on the secondary battery under a condition that the secondary battery is charged to the first cutoff voltage, and the constant-voltage charging is terminated when the charging current of the secondary battery reaches the target current greater than the first current. Since the first current refers to a current at which the secondary battery reaches a fully charged state through constant-voltage charging, the target current is greater than the first current. To be specific, in this solution, it is determined that this charging stage is completed when the secondary battery is charged to a capacity close to the capacity of the secondary battery in the fully charged state, thereby saving a charging time required to charge the secondary battery from the capacity corresponding to the target current to the fully charged capacity corresponding to the first current. The charging time for charging the secondary battery from the battery capacity corresponding to the target current to the fully charged state corresponding to the first current accounts for most of the time of the entire charging process of the secondary battery. Therefore, the charging method designed in this solution saves the time consumed for charging the secondary battery in a constant-voltage stage, and especially can save a large amount of time required to charge the secondary battery from the battery capacity corresponding to the target current (a current during constant-voltage charging) to the fully charged capacity corresponding to the first current (a cutoff current in the fully charged state) during constant-voltage charging, thereby significantly reducing the constant-voltage charging time of the secondary battery and improving the charging efficiency of the secondary battery.

In some embodiments, the positive electrode material includes at least one of the following materials: LiMn_{1-y}Fe_{y}PO₄, where y is any value in a range of 0.001 to 0.5; Li₁₊ₜMn_{1-c}Fe_{c}P_{1-z}R_{z}O₄, where t is any value in a range of -0.100 to 0.100, c is any value in a range of 0.001 to 0.500, z is any value in a range of 0.001 to 0.100, and R includes one or more elements selected from B (boron), S, Si, and N; and Li_{1+w}CₘMn₁₋ᵤFeᵤP₁₋ₐRₐO₄₋ₙDₙ, where C includes one or more elements selected from Zn, Al, Na, K, Mg, Nb, Mo, and W, R includes one or more elements selected from B (boron), S, Si, and N, D includes one or more elements selected from S, F, Cl, and Br, w is any value in a range of -0.100 to 0.100, u is any value in a range of 0.001 to 0.500, a is any value in a range of 0.001 to 0.100, n is any value in a range of 0.001 to 0.1, and m is any value in a range of 0.001 to 0.1.

In some embodiments, the first cutoff voltage is greater than or equal to a plateau voltage of the Mn element in the secondary battery. This solution provides a design in which the first cutoff voltage is greater than or equal to the plateau voltage of the Mn element in the secondary battery, facilitating deintercalation of lithium ions from a cathode, thereby allowing the capacity of the secondary battery to be fully utilized.

In some embodiments, the first cutoff voltage is any voltage from 3.97 V to 4.15 V.

In some embodiments, the performing constant-voltage charging on the secondary battery includes: performing constant-voltage charging on the secondary battery with a first charging voltage, where a voltage difference range between the first charging voltage and the first cutoff voltage includes any voltage difference range of: -0.1 V to 0.1 V, 0 V to 0.1 V, and -0.1 V to 0 V.

In some embodiments, the target current includes any current from a current range of 0.03C to 0.1C. In this solution, a range of the target current is reasonably set, ensuring that the designed target current can shorten the constant-voltage charging time of the secondary battery without causing insufficient lithium deintercalation from the cathode due to an excessively large cutoff current for constant-voltage charging, thereby avoiding impact on the capacity of the secondary battery.

In some embodiments, the charging a secondary battery includes: performing first-stage constant-current charging on the secondary battery, and terminating the first-stage constant-current charging when the battery voltage of the secondary battery reaches the first cutoff voltage.

In some embodiments, a current used for the first-stage constant-current charging includes any current from 0.1C to 4C.

In some embodiments, after terminating the constant-voltage charging, the method further includes: performing second-stage constant-current charging on the secondary battery with a second current, and terminating the charging when the battery voltage of the secondary battery reaches a second cutoff voltage. In this implementation, second-stage constant-current charging is performed on the secondary battery after the constant-voltage charging stage is terminated, which further increases the voltage of the secondary battery, increasing a lithium deintercalation speed at the cathode, thereby compensating for a small battery capacity sacrificed during the constant-voltage charging process, and further increasing the capacity of the cell.

In some embodiments, the second cutoff voltage is greater than the first cutoff voltage.

In some embodiments, a second voltage difference range between the second cutoff voltage and the first cutoff voltage is any voltage difference range of: 0.1 V to 0.3 V, 0.2 V to 0.3 V, and 0.1 V to 0.2 V. In this implementation, a voltage range of the second cutoff voltage is reasonably set, thereby avoiding an excessively high cutoff voltage that affects the lifespan of the secondary battery.

In some embodiments, the second cutoff voltage includes any voltage from 4.1 V to 4.3 V. In this implementation, the second cutoff voltage is reasonably set, properly increasing the voltage of the secondary battery after constant-voltage charging, enhancing the capacity while reducing oxidation issues inside the cell caused by high voltage, and reducing battery performance degradation, thereby ensuring the lifespan of the battery.

In some embodiments, the second current includes any current from 0.01C to 0.1C. In this implementation, a current range of the second current is reasonably set to ensure a short constant-current charging time at the second current, minimizing the time the cell spends at a high voltage, and avoiding electrochemical oxidation inside the secondary battery which may cause degradation of the lifespan of the secondary battery.

In some embodiments, the first current is any current from 0.01C to 0.02C.

In some embodiments, a corresponding battery capacity difference range between the target current and the first current includes 4% to 10%. In this implementation, a capacity difference between a battery capacity corresponding to the target current and a battery capacity corresponding to the first current is reasonably set, so that this solution enables the capacity of the secondary battery to be close to a fully charged state as far as possible while saving a large amount of time required to charge the secondary battery from the battery capacity corresponding to the target current to the capacity in the fully charged state corresponding to the first current.

In some embodiments, the first current refers to a current at which the capacity of the secondary battery reaches a fully charged state during constant-voltage charging under a same charging condition for performing the constant-voltage charging on the secondary battery to reach the target current.

According to a second aspect, this application provides a charging apparatus, where the apparatus includes a charging module; and the charging module is configured to perform the method described in the first aspect or in any optional implementation of the first aspect to charge a secondary battery. A positive electrode active material of the secondary battery includes LiMPO₄, where M includes Mn and Fe elements.

In the technical solution of this embodiment of this application, due to a low lithium deintercalation speed of a lithium manganese iron phosphate battery, many lithium ions are not completely deintercalated when a cell reaches an upper voltage limit. Therefore, constant-voltage charging is required to fully deintercalate the remaining lithium ions, thereby fully utilizing capacity advantage of the material. However, the kinetic performance of a second plateau of the lithium manganese iron phosphate battery is poorer compared to that of a conventional-system battery, so that a time for performing constant-voltage charging on the lithium manganese iron phosphate to reach a cutoff current is significantly longer than that of the conventional-system battery. Therefore, this solution provides a design in which constant-voltage charging is performed on the secondary battery under a condition that the secondary battery is charged to the first cutoff voltage, and the constant-voltage charging is terminated when the charging current of the secondary battery reaches the target current greater than the first current. Since the first current refers to a current at which the secondary battery reaches a fully charged state through constant-voltage charging, the target current is greater than the first current. To be specific, in this solution, it is determined that this charging stage is completed when the secondary battery is charged to a capacity close to the capacity of the secondary battery in the fully charged state, thereby saving a charging time required to charge the secondary battery from the capacity corresponding to the target current to the fully charged capacity corresponding to the first current. The charging time for charging the secondary battery from the battery capacity corresponding to the target current to the fully charged state corresponding to the first current accounts for most of the time of the entire charging process of the secondary battery. Therefore, the charging method designed in this solution saves the time consumed for charging the secondary battery in a constant-voltage stage, and especially can save the significant amount of time required to charge the secondary battery from the battery capacity corresponding to the target current (a current during constant-voltage charging) to the fully charged capacity corresponding to the first current (a cutoff current in the fully charged state) during constant-voltage charging, thereby significantly reducing the constant-voltage charging time of the secondary battery and improving the charging efficiency of the secondary battery.

In some embodiments, the charging module is specifically configured to perform first-stage constant-current charging on the secondary battery.

In some embodiments, the charging module is further configured to, after terminating the constant-voltage charging, perform second-stage constant-current charging on the secondary battery with a second current and terminate the charging when the battery voltage of the secondary battery reaches a second cutoff voltage.

According to a third aspect, this application provides an electronic device, including a memory and a processor, where the memory has a computer program stored therein, and the processor, when executing the computer program, performs the method described in the first aspect or in any optional embodiment of the first aspect.

According to a fourth aspect, this application provides a computer-readable storage medium, where a computer program is stored in the computer-readable storage medium, and the computer program, when executed by a processor, performs the method described in the first aspect or in any optional embodiment of the first aspect.

According to a fifth aspect, this application provides a computer program product, where the computer program product, when running on a computer, causes the computer to perform the method described in the first aspect or in any optional embodiment of the first aspect.

The above description is merely an overview of the technical solutions of this application. To enable a clearer understanding of the technical means of this application, implementation may be carried out in accordance with the content of the specification, and to make the above and other objectives, features, and advantages of this application more apparent and understandable, specific implementations of this application are provided below.

### BRIEF DESCRIPTION OF DRAWINGS

Through reading the detailed description of the preferred implementations below, various other advantages and benefits will become clear to those skilled in the art. The drawings are provided solely for the purpose of illustrating the preferred implementations and are not considered as a limitation on this application. Moreover, throughout all drawings, the same reference numerals denote the same components. In the accompanying drawings:
FIG. 1 is a schematic structural diagram of a vehicle provided by this application;
FIG. 2 is a first schematic flowchart of a charging method provided by this application;
FIG. 3 is a second schematic flowchart of a charging method provided by this application;
FIG. 4 is a schematic structural diagram of a charging apparatus provided by this application; and
FIG. 5 is a schematic structural diagram of an electronic device provided by this application.

Reference numerals in the detailed description are as follows:
10. vehicle; 100. battery; 200. controller; 300. motor; 400. charging module; 5. electronic device; 501. processor; 502. memory; and 503. communication bus.

### DETAILED DESCRIPTION

The embodiments of the technical solutions of this application will be described in detail below with reference to the accompanying drawings. The following embodiments are merely intended for a clearer description of the technical solutions of this application and therefore are used as examples, which do not constitute any limitations on the protection scope of this application.

Unless otherwise defined, all technical and scientific terms used herein have the same meaning as commonly understood by those skilled in the technical field of this application; the terms used herein are solely for the purpose of describing specific embodiments and are not intended to limit this application; the terms "include", "comprise", and any variations thereof in the specification, claims, and the above description of the drawings of this application are intended to cover non-exclusive inclusion.

In the description of the embodiments of this application, technical terms such as "first" and "second" are used only to distinguish between different objects and should not be understood as indicating or implying relative importance or implicitly indicating the number, specific order, or primary-secondary relationship of the indicated technical features. In the description of the embodiments of this application, "a plurality of" means two or more, unless otherwise explicitly and specifically defined.

In this specification, reference to "embodiment" means that specific features, structures, or characteristics described with reference to the embodiment may be incorporated in at least one embodiment of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. Additionally, the character "/" herein generally indicates that the contextually associated objects are in an "or" relationship.

In the description of the embodiments of this application, the term "a plurality of" refers to two or more (including two), similarly, "a plurality of groups" refers to two or more groups (including two groups), and "a plurality of pieces" refers to two or more pieces (including two pieces).

In the description of the embodiments of this application, the orientation or positional relationships indicated by technical terms such as "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", and "circumferential" are based on the orientation or positional relationships shown in the drawings. These terms are used only to facilitate the description of the embodiments of this application and simplify the description, and do not indicate or imply that the referred apparatus or element must have a specific orientation, be constructed, and operated in a specific orientation, and therefore should not be understood as limiting the embodiments of this application.

In the description of the embodiments of this application, unless otherwise explicitly specified and defined, technical terms such as "mounting", "connection", "join", and "fastening" should be understood in a broad sense. For example, they may refer to a fixed connection, a detachable connection, or an integral formation; they may refer to a mechanical connection or an electrical connection; and they may refer to a direct connection or an indirect connection through an intermediate medium, an internal communication between two elements, or an interaction between two elements. For those of ordinary skill in the art, the specific meanings of the above terms in the embodiments of this application can be understood based on specific circumstances.

With the characteristics such as high capacity, high energy density, excellent charge-discharge cycling performance, and the ability to maintain rated output over a long period, lithium-ion secondary batteries have been widely applied in energy storage power systems for hydroelectric, thermal, wind, and solar power stations, as well as in electric tools, electric bicycles, electric motorcycles, electric vehicles, military equipment, aerospace, and various other fields.

Due to their higher voltage plateau compared to lithium iron phosphate batteries, lithium manganese iron phosphate batteries have higher energy density than lithium iron phosphate batteries as well as retain the safety and low-cost characteristics of lithium iron phosphate batteries, so that lithium manganese iron phosphate batteries are widely used in the current market.

Although lithium manganese iron phosphate batteries have the advantage of high energy density, the addition of manganese in the lithium manganese iron phosphate batteries results in a high diffusion impedance in a manganese plateau segment, leading to a smaller lithium ion deintercalation rate. When the cell reaches an upper voltage limit, many lithium ions are not completely deintercalated. Therefore, constant-voltage charging needs to be performed on the lithium manganese iron phosphate batteries to fully deintercalate the remaining lithium ions, fully utilizing the capacity advantage of the lithium manganese iron phosphate batteries.

A constant-voltage charging time for a conventional-system battery is shorter. For example, a conventional-system battery typically reaches a cutoff current (0.01C to 0.02C) after about 15 minutes of constant-voltage charging, enabling the battery capacity to be in a fully charged state. However, due to poorer kinetic performance of a manganese plateau in lithium manganese iron phosphate, the time to reach the cutoff current during constant-voltage charging is significantly longer than the constant-voltage charging time of a conventional-system battery, for example, is typically 90 minutes longer, resulting in an issue of excessively long charging time of lithium manganese iron phosphate batteries.

To address the drawback of lithium manganese iron phosphate batteries requiring an excessively long charging time to reach a fully charged state, this application provides a charging method and apparatus, an electronic device, and a computer-readable storage medium. By appropriately adjusting the cutoff current for a constant-voltage charging of lithium manganese iron phosphate battery (greater than a conventional cutoff current of 0.01C to 0.02C), the charging time of the lithium manganese iron phosphate battery is significantly reduced, and the capacity of the secondary battery is close to a fully charged state as far as possible. Additionally, after constant-voltage charging is completed, a small-current constant-current charging method is used to further increase the voltage of the lithium manganese iron phosphate battery, further enhancing the capacity utilization of the secondary battery, thereby saving the charging time of the secondary battery while fully utilizing the capacity of the secondary battery.

The charging method and apparatus, the electronic device, and the computer-readable storage medium disclosed in the embodiments of this application can be applied to power devices using a battery as a power source, where the power devices include, but are not limited to, electric apparatuses such as vehicles, ships, or aircraft.

For ease of description, the following embodiments uses an example in which an electric apparatus is a vehicle 10 for description.

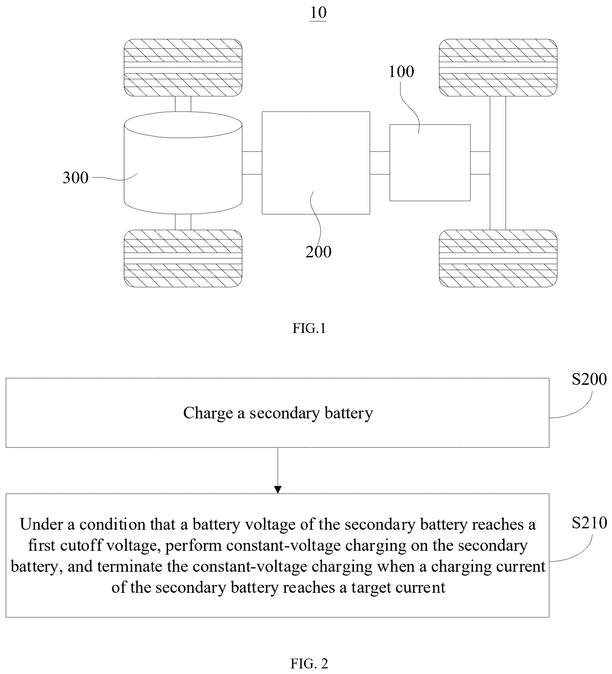

Refer to FIG. 1. FIG. 1 is a schematic structural diagram of a vehicle 10 according to some embodiments of this application. The vehicle 10 may be a fossil fuel vehicle, a natural-gas vehicle, or a new energy vehicle, where the new energy vehicle may be a battery electric vehicle, a hybrid electric vehicle, a range-extended vehicle, or the like. The interior of the vehicle 10 is provided with a battery 100, where the battery 100 may be disposed at the bottom, front, or rear of the vehicle 10. The battery 100 may be configured to supply power to the vehicle 10. For example, the battery 100 may be used as an operational power source for the vehicle 10. The vehicle 10 may further include a controller 200 and a motor 300, where the controller 200 is configured to control the battery 100 to supply power to the motor 300, for example, to meet the power demands for starting, navigating, and driving the vehicle 10.

In some embodiments of this application, the battery 100 may not only serve as an operational power source for the vehicle 10 but also as a driving power source for the vehicle 10, replacing or partially replacing fuel or natural gas to provide driving power for the vehicle 10.

It should be noted that, in this application, the battery 100 serves as the driving power source for the vehicle 10 to provide driving power for the vehicle 10.

According to some embodiments of this application, a charging method according to one embodiment of this application is provided. This charging method can be used to control the charging of a secondary battery, where the secondary battery is the M3P battery as described above, that is, a battery with a positive electrode active material of LiMPO₄ in a positive electrode plate. The charging method may be executed by a computing device, where the computing device includes, but is not limited to, a controller, a chip, and a battery management system (Battery Management System, BMS). As shown in FIG. 2, the charging method may be implemented in the following manner, including the following steps.

Step S200: Charge a secondary battery.

Step S210: Under a condition that a battery voltage of the secondary battery reaches a first cutoff voltage, perform constant-voltage charging on the secondary battery, and terminate the constant-voltage charging when a charging current of the secondary battery reaches a target current.

In the above implementation, the positive electrode active material is LiMPO₄, where M includes Mn and Fe elements, meaning that the M element may include Mn and Fe; alternatively, in addition to Mn and Fe, the M element may further optionally include a non-metal element, such as one or more elements selected from B, S, Si, and N; alternatively, in addition to Mn, Fe, and the non-metal element, the M element may further include an alkali metal element (for example, one or both of Na and K), an alkaline earth metal element (for example, Mg), a transition metal element (for example, one or more elements selected from Zn, Al, Nb, Mo, and W), a halogen element (for example, one or more elements selected from F, Cl, and Br), and the like. It can be understood that the M element may be a doping element for the Mn element or the Fe element, the M element may be a doping element for the Li element, or the M element may be a doping element for the P element or the O element.

In the above implementation, the computing device (for example, battery management system BMS) can acquire a current state of the secondary battery, such as a charging state, an operating state, and an idle state, where the charging state refers to a state in which the secondary battery is connected to an external power supply device and the electrical energy from the external power supply device is charged into the secondary battery; the operating state, also referred to as a discharging state, is a state in which the secondary battery releases stored electrical energy as external power; and the idle state refers to a state in which the secondary battery is neither charged nor discharged. Specifically, the computing device can identify whether the external power supply device has a charging current, or whether the secondary battery currently has a charging current/charging voltage, to determine whether the secondary battery is in the charging state.

On the basis mentioned above, the secondary battery is connected to an external power supply device and the electrical energy from the external power supply device is charged into the secondary battery, which corresponds to step S200 of charging the secondary battery. In step S200, the secondary battery may be charged using a constant-current charging method or using a charging method with a non-constant charging current.

During the process of charging the secondary battery, the battery voltage of the secondary battery changes continuously as charging progresses. The computing device can monitor the battery voltage of the secondary battery, and when the battery voltage of the secondary battery reaches the first cutoff voltage, step S210 is performed, that is, constant-voltage charging is performed on the secondary battery. For example, assuming that the first cutoff voltage is 4.1 V, the computing device performs step S210 to perform constant-voltage charging on the secondary battery when the battery voltage reaches 4.1 V during the charging process of the secondary battery. The computing device can monitor the battery voltage of the secondary battery in real time or frequently monitor the battery voltage at certain time intervals.

After the computing device performs constant-voltage charging on the secondary battery, the charging current of the secondary battery changes continuously as charging progresses during the constant-voltage charging process. Under this condition, the computing device can switch to monitoring the charging current of the secondary battery, and terminate the constant-voltage charging process of the secondary battery when the charging current of the secondary battery reaches the target current.

In this solution, the designed target current is greater than the first current, where the first current may specifically refer to a current at which the capacity of the secondary battery reaches a fully charged state during constant-voltage charging, specifically a current at which the capacity of the secondary battery reaches a fully charged state during constant-voltage charging under a same charging condition for performing the constant-voltage charging on the secondary battery to reach the target current. The first current can be obtained from an empirical value of the cutoff current when the capacity of the secondary battery reaches a fully charged state under a conventional constant-voltage charging condition. For example, assuming that the capacity of the secondary battery reaches a fully charged state when the secondary battery undergoes constant-voltage charging to reach 0.02C based on conventional experience, the first current is 0.02C.

In this solution, the designed corresponding battery capacity difference between the target current and the first current falls within a preset capacity difference range, where the preset capacity difference range refers to a capacity difference between a battery capacity of the secondary battery when constant-voltage charging is terminated after the secondary battery reaches the target current and a fully charged capacity when constant-voltage charging is terminated after the secondary battery reaches the first current. Specifically, under a condition that the secondary battery reaches the target current during constant-voltage charging, the capacity of the secondary battery has not yet reached the fully charged capacity of the secondary battery but differs from the fully charged capacity of the secondary battery to some extent, with the battery capacity difference falling within the preset capacity difference range, so that the charging capacity of the secondary battery reaching the target current during constant-voltage charging is close to the fully charged capacity as far as possible. Specifically, the preset capacity difference range designed in this solution may include 4% to 10%. For example, assuming that the preset capacity difference range includes 4% to 10%, and the fully charged state is 100%, the battery capacity corresponding to the target current may be 90% to 96%.

It should be noted that, in this solution, the fully charged capacity of the battery indicates that the capacity of the secondary battery is close to a fully charged degree. Specifically, the fully charged capacity of the battery designed in this solution may be 100%. However, as the battery is used over time, its capacity may decay. In such case, the fully charged capacity of the battery described in this application may include any capacity state where the battery capacity is greater than or equal to 95% of the total battery capacity or may be adjusted based on the actual condition of the battery. Those skilled in the art can understand that, in the context of this application, the fully charged degree of the battery capacity does not necessarily mean physically fully charged (that is, charged to 100%) and may be adjusted to a value close to 100% based on the specific condition of the battery.

Through a plurality of experiments and related data analysis, the main reason for the long duration of conventional constant-voltage charging for a lithium manganese iron phosphate battery (the secondary battery in this solution) can be summarized as follows: during constant-voltage charging, when the target current changes to the first current, or during constant-voltage charging, when the secondary battery is charged from the battery capacity corresponding to the target current to the fully charged capacity corresponding to the first current, the time for charging accounts for most of the time of the entire charging process. For example, assuming that the first current is 0.02C (the fully charged capacity is 100%) and the target current is a current of 0.05C greater than 0.02C (the capacity of the secondary battery is 94%), the time for the current to change from 0.05C to 0.02C (battery capacity changing from 94% to 100%) during constant-voltage charging of the secondary battery accounts for most of the time of the entire charging process. Therefore, in this solution, this charging stage can be completed when the capacity of the secondary batter is charged to a level that differs from the fully charged state of the secondary battery to some extent, thereby saving the charging time required to reach the fully charged capacity corresponding to the first current from the capacity corresponding to the target current. Since the charging time required to reach the fully charged state corresponding to the first current from the battery capacity corresponding to the target current accounts for most of time of the entire charging process of the secondary battery, the charging method designed in this solution can save a large amount of time required to charge the secondary battery from the battery capacity corresponding to the target current to the fully charged capacity corresponding to the first current (saving two-thirds of the time of a conventional constant-voltage charging process), thereby significantly shortening the constant-voltage charging time of the secondary battery and improving the charging efficiency of the secondary battery.

In the charging method provided by this solution, this solution provides the design in which constant-voltage charging is performed on the secondary battery when the secondary battery is charged to the first cutoff voltage, and the constant-voltage charging is terminated when the charging current of the secondary battery reaches the target current greater than the first current. The first current refers to a current at which the secondary battery reaches a fully charged state during constant-voltage charging, and the target current is greater than the first current. To be specific, in this solution, it is determined that this charging stage is completed when the secondary battery is charged to a capacity close to the capacity of the secondary battery in the fully charged state, thereby saving a charging time required to charge the secondary battery from the capacity corresponding to the target current to the fully charged capacity corresponding to the first current. The charging time for charging the secondary battery from the battery capacity corresponding to the target current to the fully charged state corresponding to the first current accounts for most of the time of the entire charging process of the secondary battery. Therefore, the charging method designed in this solution saves the time consumed for charging the secondary battery in a constant-voltage stage, and especially can save a large amount of time required to charge the secondary battery from the battery capacity corresponding to the target current (a current during constant-voltage charging) to the fully charged capacity corresponding to the first current (a cutoff current in the fully charged state) during constant-voltage charging, thereby significantly reducing the constant-voltage charging time of the secondary battery and improving the charging efficiency of the secondary battery.

In an optional implementation of the embodiments of this application, the first cutoff voltage designed in this solution is greater than or equal to the plateau voltage of the Mn element in the secondary battery.

Since manganese and iron have different charge-discharge voltages, and the voltage plateau of iron is lower than that of manganese, the secondary battery exhibits two voltage plateaus during charging and discharging, corresponding to redox reactions of manganese and iron. A plateau near 3.5 V corresponds to the conversion of Fe²⁺ to Fe³⁺, and a plateau near 3.97 V corresponds to the conversion of Mn²⁺ to Mn³⁺. The plateau voltage of the Mn element designed in this solution refers to a voltage at which the Mn element undergoes a chemical valence change. For example, if the voltage at which the Mn element undergoes a chemical valence change is 3.97 V, the plateau voltage of the Mn element is 3.97 V. The first cutoff voltage designed in this solution is greater than or equal to 3.97 V, ensuring that the secondary battery has surpassed the plateau of the Mn element when entering the constant-voltage charging stage. At this first cutoff voltage, the Mn element further facilitates deintercalation of lithium ions from a cathode, thereby enhancing the capacity utilization of the secondary battery. However, the first cutoff voltage should not be too high, as an excessively high first cutoff voltage leads to oxidation issues of an electrode plate and an electrolyte, which deteriorate the lifespan of the secondary battery. Therefore, the first preset voltage range designed in this solution, while being greater than the plateau voltage of the Mn element, needs to be maintained within a certain upper voltage limit.

In a specific example, on a basis that the voltage at which the Mn element undergoes a chemical valence change is 3.97 V, the first cutoff voltage designed in this solution may be any voltage from any voltage range of 3.97 V to 4.15 V, 4.0 V to 4.15 V, 4.0 V to 4.1 V, and 4.1 V to 4.15 V.

Specifically, the first cutoff voltage may specifically be any one of 3.97 V, 3.98 V, 4 V, 4.01 V, 4.03 V, 4.05 V, 4.07 V, 4.1 V, 4.11 V, 4.12 V, 4.13 V, 4.14 V, and 4.15 V. Preferably, the first cutoff voltage may be 4 V or 4.1 V.

In an optional implementation of the embodiments of this application, as described above, when the battery voltage of the secondary battery reaches the first cutoff voltage, constant-voltage charging is performed on the secondary battery. Specifically, in this solution, constant-voltage charging is performed on the secondary battery with a first charging voltage.

Specifically, in this solution, a first preset voltage difference range may be set, and a voltage difference between the first cutoff voltage and the first charging voltage needs to fall within this first preset voltage difference range. The first preset voltage difference range may include any one of -0.1 V to 0.1 V, 0 V to 0.1 V, and -0.1 V to 0 V. Exemplarily, a first voltage difference may specifically be any one of -0.1 V, 0 V, and 0.1 V.

Preferably, the voltage difference between the first cutoff voltage and the first charging voltage is preferably 0 V, that is, the first cutoff voltage is equal to the first charging voltage. For example, when the first cutoff voltage is 4.1 V, in this solution, constant-voltage charging is performed on the secondary battery with a first charging voltage of 4.1 V when the secondary battery is charged to the first cutoff voltage of 4.1 V.

In an optional implementation of the embodiments of this application, the first current designed in this solution refers to a current at which the capacity of the secondary battery reaches a fully charged state under a conventional constant-voltage charging condition. Specifically, the first current designed in this solution may be any current from 0.01C to 0.02C.

The target current designed in this solution is greater than the first current. However, since the setting of an excessively small target current results in an excessively long constant-voltage charging time, and the setting of an excessively large target current results in insufficient lithium deintercalation at the cathode, the capacity cannot be fully utilized. Therefore, the target current designed in this solution may include any current from any current range of 0.03C to 0.1C, 0.04C to 0.1C, 0.05C to 0.1C, 0.06C to 0.1C, and 0.03C to 0.06C. Preferably, since the lithium deintercalation speed decreases to some extent after the secondary battery reaches 0.05C during constant-voltage charging, the target current is preferably any current from 0.05C to 0.1C.

In a specific example, the target current designed in this solution may specifically be any one of 0.03C, 0.04C, 0.05C, 0.055C, 0.06C, 0.065C, 0.07C, 0.075C, 0.08C, 0.085C, 0.09C, 0.095C, and 0.1C. Preferably, the target current may be 0.04C, 0.05C, or 0.06C.

In the above designed implementation, in this solution, a range of the target current is reasonably set, ensuring that the designed target current can shorten the constant-voltage charging time of the secondary battery without causing insufficient lithium deintercalation at the cathode due to an excessively large cutoff current for constant-voltage charging, thereby avoiding impact on the capacity of the secondary battery.

In an optional implementation of the embodiments of this application, for step S200, in this solution, first-stage constant-current charging may be performed on the secondary battery, and the first-stage constant-current charging is terminated when the battery voltage of the secondary battery reaches the first cutoff voltage.

A current value used for the first-stage constant-current charging may be determined based on an empirical value. Specifically, the current value used for the first-stage constant-current charging may include any current from any range of 0.1C to 4C, 0.33C to 4C, 0.5C to 4C, 1C to 4C, 0.1C to 3C, 0.1C to 2C, and 0.33C to 0.35C.

In a specific example, the current value used for the first-stage constant-current charging designed in this solution may specifically be any one of 0.1C, 0.2C, 0.3C, 0.33C, 0.35C, 0.45C, 0.5C, 0.6C, 0.7C, 0.8C, 0.9C, 1C, 1.1C, 1.2C, 1.3C, 1.4C, 1.5C, 1.6C, 1.7C, 1.8C, 1.9C, 2C, 2.1C, 2.2C, 2.3C, 2.4C, 2.5C, 2.6C, 2.7C, 2.8C, 2.9C, 3C, 3.1C, 3.2C, 3.3C, 3.4C, 3.5C, 3.6C, 3.7C, 3.8C, 3.9C, and 4C.

Preferably, the current value used for the first-stage constant-current charging may be 0.33C, 0.35C, or 0.45C.

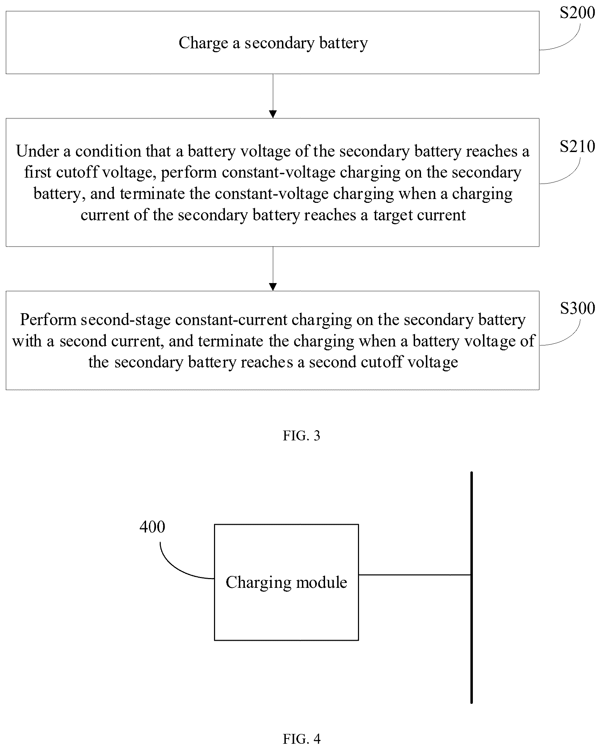

In an optional implementation of the embodiments of this application, as described above, the constant-voltage charging process is completed when the charging current of the secondary battery reaches the target current during constant-voltage charging. After the constant-voltage charging stage is terminated, to further utilize the battery capacity, as shown in FIG. 3, this solution may further adopt the following method.

Step S300: Perform second-stage constant-current charging on the secondary battery with a second current, and terminate the second-stage constant-current charging when a battery voltage of the secondary battery reaches a second cutoff voltage.

In the above implementation, in this solution, second-stage constant-current charging is further performed on the secondary battery with the second current after the constant-voltage charging process is completed. Constant-current charging can further increase the voltage of the secondary battery, thereby increasing the lithium deintercalation speed at the cathode, compensating for a small battery capacity sacrificed during the constant-voltage charging process, and further increasing the capacity of the cell.

In a possible implementation, to ensure the lifespan of the secondary battery, the time the cell spends in a high-voltage stage needs to be shortened. Therefore, the second cutoff voltage should not be set too high above the first cutoff voltage. Based on this, a second voltage difference between the second cutoff voltage and the first cutoff voltage designed in this solution may fall within a second preset voltage difference range, and the second preset voltage difference range includes any one of 0.1 V to 0.3 V, 0.2 V to 0.3 V, and 0.1 V to 0.2 V. In a possible example, the second preset voltage difference may be any one of 0.1 V, 0.15 V, 0.2 V, 0.25 V, and 0.3 V.

Based on the above designed second preset voltage difference range, the second cutoff voltage designed in this solution may be any voltage from any voltage range of 4.1 V to 4.3 V, 4.15 V to 4.3 V, 4.15 V to 4.25 V, and 4.2 V to 4.3 V.

Specifically, the designed second cutoff voltage may specifically be any one of 4.1 V, 4.13 V, 4.15 V, 4.17 V, 4.18 V, 4.19 V, 4.2 V, 4.21 V, 4.22 V, 4.23 V, 4.24 V, 4.25 V, 4.26 V, 4.27 V, 4.28 V, 4.29 V, and 4.3 V. Preferably, the second cutoff voltage may be 4.15 V or 4.25 V.

In an optional implementation of the embodiments of this application, to further shorten the time the secondary battery spends at a high voltage, the second current used in this solution may be a small current, to ensure that the time the cell spends at a high voltage is as short as possible, thereby avoiding electrochemical oxidation inside the cell which may cause degradation of the lifespan of the cell.

On the basis mentioned above, the second current designed in this solution may include any current from any current range of 0.01C to 0.1C, 0.05C to 0.1C, and 0.01C to 0.05C. Specifically, the second charging current designed in this solution may be any one of 0.01C, 0.02C, 0.03C, 0.04C, 0.05C, 0.06C, 0.07C, 0.08C, 0.09C, and 0.1C.

In the above designed implementation, in this solution, constant-current charging is performed on the secondary battery with a relatively small second current after constant-voltage charging is completed, which further increases the voltage of the secondary battery, increasing the lithium deintercalation speed at the cathode, thereby allowing the capacity of the secondary battery to be fully utilized. Additionally, the constant-current charging process performed with the second charging current designed in this solution is short, to ensure that the time the cell spends at a high voltage is as short as possible, mitigating or avoiding electrochemical oxidation inside the secondary battery which may cause degradation of the lifespan of the secondary battery.

In an optional implementation of the embodiments of this application, M in the positive electrode material LiMPO₄ designed in this solution may include the Mn element and the Fe element. In a possible implementation, LiMPO₄ may be a compound LiMn_{1-y}Fe_{y}PO₄.

For example, a preparation method of a compound LiMn_{0.80}Fe_{0.20}PO₄ includes the following steps.

Step S1: Prepare Fe-doped manganese oxalate.

919.4 g of manganese carbonate and 231.7 g of ferrous carbonate are added to a mixer and thoroughly mixed for 6 h. Then, the resulting mixture is transferred to a reactor, added with 5 L deionized water and 1260.6 g of oxalic acid dihydrate, heated to 80°C, stirred thoroughly at a rotating speed of 500 rpm for 6 h, and mixed uniformly until a reaction terminates with no bubble generation, to obtain an Fe-doped manganese oxalate suspension. Then, the suspension is filtered, dried at 120°C, and then sand-milled to obtain manganese iron oxalate particles with a particle size of 100 nm.

Step S2: Prepare LiMn_{0.80}Fe_{0.20}PO₄.

1791.4 g of the manganese iron oxalate (calculated as C₂O₄Mn_{0.80}Fe_{0.20}•2H₂O) prepared in Step S1, 369.4 g of lithium carbonate, and 1150.1 g of ammonium dihydrogen phosphate are added to 20 L deionized water, stirred thoroughly, and mixed uniformly for reaction at 80°C for 10 h to obtain a slurry. The slurry is transferred to a spray drying device for spray drying and granulation, and dried at 250°C to obtain a powder material. In a protective atmosphere (including 90% of nitrogen and 10% of hydrogen), the powder material is sintered in a roller kiln at 700°C for 4 h.

The above positive electrode active material may be a compound with a chemical formula Li₁₊ₜMn_{1-c}Fe_{c}P_{1-z}R_{z}O₄, where t is any value in a range of -0.100 to 0.100, c is any value in a range of 0.001 to 0.500, z is any value in a range of 0.001 to 0.100, and R includes one or more elements selected from B (boron), S, Si, and N. The values of t, c, and z satisfy a condition that the entire compound remains electrically neutral. A ratio of c to 1-c is 1:10 to 1:1, optionally 1:4 to 1:1. Herein, c denotes a sum of stoichiometric numbers of the Fe element doping at an Mn site. In some implementations, a ratio of z to 1-z is 1:9 to 1:999, optionally 1:499 to 1:249. Herein, z denotes a sum of stoichiometric numbers of the R element doping at a P site.

A preparation method of the compound Li₁₊ₜMn_{1-c}Fe_{c}P_{1-z}R_{z}O₄ may include the following steps.
(1) Dissolve and stir a manganese source, an iron source, and an acid in a solvent to generate a suspension of a manganese salt doped with the Fe element, filter the suspension, and dry a filter cake to obtain a manganese salt doped with the Fe element.
(2) Add a lithium source, a phosphorus source, a source of the R element, a solvent, and the manganese salt doped with the Fe element obtained in step (1) to a reaction vessel, and grind and mix them to obtain a slurry.
(3) Transfer the slurry obtained in step (2) to a spray drying device for spray drying and granulation to obtain particles.
(4) Sinter the particles obtained in step (3) to obtain a positive electrode active material.

In any implementation, the manganese source may be a manganese-containing substance known in the art for preparing lithium manganese phosphate, for example, the manganese source may be selected from one of elemental manganese, manganese dioxide, manganese phosphate, manganese oxalate, manganese carbonate, or a combination thereof. The iron source is selected from at least one of elemental substance, oxide, phosphate, oxalate, carbonate, and sulfate of iron. The acid is selected from one or more of hydrochloric acid, sulfuric acid, nitric acid, phosphoric acid, and organic acid such as oxalic acid, for example, it may be oxalic acid. The source of the R element is selected from at least one of sulfate, borate, nitrate, and silicate of the R element.

For example, a preparation method of a compound Li_{1.001}Mn_{0.999}Fe_{0.001}P_{0.999}Si_{0.001}O₄ includes the following steps.

Step S1: Prepare Fe-doped manganese oxalate.

1148.2 g of manganese carbonate and 1.2 g of ferrous carbonate are added to a mixer and thoroughly mixed for 6 h. Then, the resulting mixture is transferred to a reactor, added with 5 L deionized water and 1260.6 g of oxalic acid dihydrate, heated to 80°C, stirred thoroughly at a rotating speed of 500 rpm for 6 h, and mixed uniformly until a reaction terminates with no bubble generation, to obtain an Fe-doped manganese oxalate suspension. Then, the suspension is filtered, dried at 120°C, and sand-milled to obtain manganese iron oxalate particles with a particle size of 100 nm.

Step S2: Prepare Li_{1.001}Mn_{0.999}Fe_{0.001}P_{0.999}Si_{0.001}O₄.

1789.6 g of the manganese iron oxalate (calculated as C₂O₄Mn_{0.999}Fe_{0.001}•2H₂O) prepared in Step S1, 369.8 g of lithium carbonate, 1148.9 g of ammonium dihydrogen phosphate, and 0.8 g of silicic acid are added to 20 L deionized water, stirred thoroughly, and mixed uniformly for reaction at 80°C for 10 h to obtain a slurry. The slurry is transferred to a spray drying device for spray drying and granulation, and dried at 250°C to obtain a powder material. In a protective atmosphere (including 90% of nitrogen and 10% of hydrogen), the powder material is sintered in a roller kiln at 700°C for 4 h.

In some other implementations, the above positive electrode active material may be a compound with a chemical formula Li_{1+w}CₘMn₁₋ᵤFeᵤP₁₋ₐRₐO₄₋ₙDₙ, where C includes one or more elements selected from Zn, Al, Na, K, Mg, Nb, Mo, and W, R includes one or more elements selected from B (boron), S, Si, and N, D includes one or more elements selected from S, F, Cl, and Br, w is any value in a range of -0.100 to 0.100, u is any value in a range of 0.001 to 0.500, a is any value in a range of 0.001 to 0.100, n is any value in a range of 0.001 to 0.1, and m is any value in a range of 0.001 to 0.1. Similarly, the values of w, u, a, and m satisfy a condition that the entire compound remains electrically neutral.

A preparation method of the compound Li_{1+w}CₘMn₁₋ᵤFeᵤP₁₋ₐRₐO₄₋ₙDₙ may include the following steps.
(1) Dissolve and stir a manganese source, an iron source, and an acid in a solvent to generate a suspension of a manganese salt doped with the Fe element, filter the suspension, and dry a filter cake to obtain a manganese salt doped with the Fe element.
(2) Add a lithium source, a phosphorus source, a source of the C element, a source of the R element, a source of the D element, a solvent, and the manganese salt doped with the Fe element obtained in step (1) to a reaction vessel, and grind and mix them to obtain a slurry.
(3) Transfer the slurry obtained in step (2) to a spray drying device for spray drying and granulation to obtain particles.
(4) Sinter the particles obtained in step (3) to obtain a positive electrode active material.

In any implementation, the source of the C element is selected from at least one of elemental substance, oxide, phosphate, oxalate, carbonate, and sulfate of the C element. The manganese source may be a manganese-containing substance known in the art for preparing lithium manganese phosphate, for example, the manganese source may be selected from one of elemental manganese, manganese dioxide, manganese phosphate, manganese oxalate, manganese carbonate, or a combination thereof. The iron source is selected from at least one of elemental substance, oxide, phosphate, oxalate, carbonate, and sulfate of iron. The acid is selected from one or more of hydrochloric acid, sulfuric acid, nitric acid, phosphoric acid, and organic acid such as oxalic acid, for example, it may be oxalic acid. The source of the R element is selected from at least one of sulfate, borate, nitrate, and silicate of the R element. The source of the D element is selected from at least one of elemental substance and ammonium salt of the element D.

For an implementation where the positive electrode active material may contain Li_{1+w}CₘMn₁₋ᵤFeᵤP₁₋ₐRₐO₄₋ₙDₙ, a magnitude of w is influenced by valence states of Fe and R and magnitudes of u and a, to ensure that an entire system remains electrically neutral. If the value of w is too small, a lithium content of the entire system decreases, affecting capacity utilization of the material. The value of u limits a total amount of all doping elements; if u is too small, that is, a doping amount is too low, the doping elements do not function, and if u exceeds 0.5, the Mn content in the system is low, affecting a voltage platform of the material. The R element dopes at a P site, and since a P-O tetrahedron is relatively stable, and an excessively large value of a affects the stability of the material, the value of a is limited to 0.001 to 0.100. More specifically, w is any value in a range of -0.100 to 0.100, u is any value in a range of 0.001 to 0.500, a is any value in a range of 0.001 to 0.100, n is any value in a range of 0.001 to 0.1, and m is any value in a range of 0.001 to 0.1. For example, 1+w is selected from a range of 0.9 to 1.1, such as 0.97, 0.977, 0.984, 0.988, 0.99, 0.991, 0.992, 0.993, 0.994, 0.995, 0.996, 0.997, 0.998, or 1.01; w is selected from a range of 0.001 to 0.1, such as 0.001 or 0.005; u is selected from a range of 0.001 to 0.5, such as 0.001, 0.005, 0.02, 0.05, 0.1, 0.15, 0.2, 0.25, 0.3, 0.34, 0.345, 0.349, 0.35, or 0.4; a is selected from a range of 0.001 to 0.1, such as 0.001, 0.005, 0.08, or 0.1; n is selected from a range of 0.001 to 0.1, such as 0.001, 0.005, 0.08, or 0.1; and the positive electrode active material is electrically neutral.

Unless otherwise specified, in the above chemical formula, when a doping site has two or more of the above elements, the above limitation on the value range of w, u, a, or m is not only a limitation on a stoichiometric number of each element at the site but also a limitation on a sum of stoichiometric numbers of the elements at the site. For example, if there is a compound with a chemical formula Li_{1+w}Mn₁₋ᵤFeᵤP₁₋ₐRₐO₄, when R includes two or more elements R1, R2, ..., and Rn, stoichiometric numbers a1, a2, ..., and an of R1, R2, ..., and Rn need to each fall within a value range defined for a in this application, and a sum of a1, a2, ..., and an need to fall within the value range as well.

It should be noted that a charging/discharging process of a battery is accompanied by intercalation, deintercalation, and consumption of Li, and a molar content of Li varies when the battery is discharged to different states. In this application, a molar content of Li is limited is based on a feeding state of the material, and during a charging and discharging process of the battery, the molar content of Li changes.

The effects of the technical solutions of this application were verified below.

### I. Preparation of secondary battery.

### Preparation of cathode plate:

An active material LiMn_{0.80}Fe_{0.20}PO₄, conductive carbon black Super-P, and a binder PVDF were thoroughly stirred and uniformly mixed at a weight ratio of 97:1:2 in an NMP solvent system; the resulting mixture was applied onto an Al foil, with a coating weight controlled to be 360 g/m²; and the Al foil was dried, cold-pressed, slit, and cut to obtain a cathode plate of a secondary battery.

### Preparation of anode plate:

Graphite, conductive carbon black Super-P, and a binder SBR were thoroughly stirred and uniformly mixed at a weight ratio of 97.4:0.8:1.8 in an H2O solvent system; the resulting mixture was applied onto a Cu foil, with a coating weight controlled to be 0.163 mg/1540 mm²; and the Cu foil was dried, cold-pressed, slit, and cut to obtain an anode plate of a secondary battery.

### Preparation of secondary battery:

A PE/PP/PE three-layer porous polymer film was used as a separator, and propylene carbonate was used as an electrolyte.

The cathode plate, the separator, and the anode plate were wound, and a qualified bare cell was welded onto a top cover through a tab, followed by casing, baking, electrolyte injection, and formation to complete the preparation of a secondary battery.

### II. Charging operation:

The secondary battery was charged according to the charging method described above. Specifically, referring to Table 1 and Table 2, first-stage constant-current charging was first performed on the secondary battery until the first cutoff voltage was reached; then, under a condition that the battery voltage of the secondary battery reached the first cutoff voltage, constant-voltage charging was performed on the secondary battery with a first charging voltage until the charging current of the secondary battery reached the target current; ultimately, under a condition that the charging current of the secondary battery reached the target current, second-stage constant-current charging was performed on the secondary battery with a second current until, and the charging was terminated when the battery voltage of the secondary battery reached the second cutoff voltage.

### III. Performance test:

Capacity testing method: At ambient temperature (25°C), the secondary battery was fully charged using the charging methods shown in Table 1 and Table 2, then left standing for 2 hours at ambient temperature (25°C), and discharged at a rate of 0.33C to a cutoff voltage (2.0 V), and a released capacity was recorded, where capacity = discharging current (A) × discharging time (h).

The secondary battery was tested using the examples and comparative examples in Table 1 and Table 2 below, and the test results were obtained as follows.

**Table 1**

| Step 1 | | | Step 2 | | | Step 3 | | | Total charging time (min) | Capacity (Ah) | Test object |
|---|---|---|---|---|---|---|---|---|---|---|---|
| First charging current (C) | First cutoff voltage (V1) | Charging time (min) | First charging voltage (V2) | First current or target current (C) | Charging time (min) | Second current (C) | Second cutoff voltage (V3) | Charging time (min) | | | |
| | 4.0 | 90 | 4.0 | 0.02 | 174 | / | / | / | 264 | 142.5 | Comparative Example 1 |
| | 4.0 | 90 | 4.0 | 0.05 | 45 | 0.05 | 4.2 | 28 | 163 | 142.2 | Example 1 |
| | | | | 0.10 | 38 | | 4.2 | 33 | 161 | 142.0 | Example 2 |
| 0.33 | | | | 0.02 | 137 | / | / | / | 297 | 145.0 | Comparative Example 2 |
| | | | | 0.05 | 31 | 0.05 | 4.2 | 21 | 212 | 144.5 | Example 3 |
| | | | | 0.10 | 25 | | 4.2 | 26 | 211 | 144.3 | Example 4 |
| | | | | 0.02 | 115 | / | / | / | 305 | 145.5 | Comparative Example 3 |
| | | | | 0.05 | 24 | 0.05 | 4.2 | 16 | 230 | 145.3 | Example 5 |
| | | | | 0.10 | 15 | | 4.2 | 22 | 227 | 145.1 | Example 6 |

**Table 2**

| Step 1 | | | Step 2 | | | Step 3 | | | Total charging time (min) | Capacity (Ah) | Test object |
|---|---|---|---|---|---|---|---|---|---|---|---|
| First charging current (C) | First cutoff voltage (V1) | Charging time (min) | First charging voltage (V2) | First current or target current (C) | Charging time (min) | Second current (C) | Second cutoff voltage /(V2) | Charging time (min) | | | |
| | 4.0 | 90 | 4.0 | 0.02 | 179 | / | / | / | 269 | 144.0 | Comparativ e Example 4 |
| | 4.0 | 90 | 4.0 | 0.05 | 45 | 0.05 | 4.3 | 34 | 169 | 143.6 | Example 7 |
| | | | | 0.10 | 38 | | 4.3 | 40 | 168 | 143.3 | Example 8 |
| 0.33 | 4.1 | 160 | 4.1 | 0.02 | 141 | / | / | / | 301 | 146.5 | Comparativ e Example 5 |
| | | | 4.1 | 0.05 | 31 | 0.05 | 4.3 | 25 | 216 | 146.2 | Example 9 |
| | | | | 0.10 | 25 | | 4.3 | 32 | 217 | 145.7 | Example 10 |
| | 4.15 | 190 | 4.15 | 0.02 | 118 | / | / | / | 308 | 147.0 | Comparativ e Example 6 |
| | | | 4.15 | 0.05 | 24 | 0.05 | 4.3 | 19 | 233 | 146.8 | Example 11 |
| | | | | 0.10 | 15 | | 4.3 | 25 | 230 | 146.5 | Example 12 |

In this solution, the secondary battery was tested using the data in Table 1 and Table 2. The testing method in the comparative examples was as follows: step 1, first-stage constant-current charging was performed on the secondary battery with a first charging current (0.33C) until the charging voltage of the secondary battery reached the first cutoff voltage (which was 4.0 V in Comparative Examples 1 and 4, 4.1 V in Comparative Examples 2 and 5, and 4.15 V in Comparative Examples 3 and 6); and step 2, constant-voltage charging was performed on the secondary battery with a first charging voltage (which was 4.0 V in Comparative Examples 1 and 4, 4.1 V in Comparative Examples 2 and 5, and 4.15 V in Comparative Examples 3 and 6), and the charging was terminated when the charging current reached the first current of 0.02C.

The testing method in the examples of this solution was as follows: step 1, first-stage constant-current charging was performed on the secondary battery with a first charging current (0.33C) until the charging voltage of the secondary battery reached the first cutoff voltage (which was 4.0 V in Examples 1, 2, 7, and 8, 4.1 V in Examples 3, 4, 9, and 10,, and 4.15 V in Examples 5, 6, 11, and 12); and step 2, constant-voltage charging was performed on the secondary battery with a first charging voltage (which was 4.0 V in Examples 1, 2, 7, and 8, 4.1 V in Examples 3, 4, 9, and 10, and 4.15 V in Examples 5, 6, 11, and 12) until the charging current of the secondary battery reached the target current (which was 0.05C in Examples 1, 3, 5, 7, 9, and 11, and 0.1C in Examples 2, 4, 6, 8, 10, and 12); and step 3, after the charging current of the secondary battery reached the target current, second-stage constant-current charging was performed on the secondary battery with a second current (0.05C), and the charging was terminated when the charging voltage of the secondary battery reached the second cutoff voltage (which was 4.2 V in Examples 1-6, and 4.3 V in Examples 7-12).

From Table 1, it can be seen that the capacities after charging in Comparative Example 1, Example 1, and Example 2 are all within the range of 142 to 143, where the capacities were essentially equivalent. In Comparative Example 1, 0.02C is used as reference (a first current for conventional constant-voltage charging); in Example 1, a target current of 0.05C is used; in Example 2, a target current of 0.1C is used. In Example 1, Example 2, and Comparative Example 1, charging is performed under the same conditions (the first charging current is 0.33C, and the first cutoff voltage is 4.0 V) in Step 1. After the first cutoff voltage of 4.0 V is reached through charging in Step 1, in Comparative Example 1, Example 1, and Example 2, constant-voltage charging is performed with the same first charging voltage (4.0 V). Due to the different target currents set, Comparative Example 1 takes 174 minutes to reach the first current of 0.02C with the first charging voltage, Example 1 takes 45 minutes to reach the target current of 0.05C with the first charging voltage, and Example 2 takes 38 minutes to reach the target current of 0.1C with the first charging voltage. This shows that reasonably increasing the target current from 0.02C to between 0.05C and 0.1C can significantly shorten the charging time of the constant-voltage charging process in Step 2. Additionally, while the charging time of the constant-voltage charging process is significantly shortened, in Example 1 and Example 2, constant-current charging is further performed at 0.05C to reach a cutoff voltage of 4.2 V, thereby increasing the capacity of the secondary battery, and making the capacities of the secondary batteries in Examples 1 and 2 comparable to that of the secondary battery in Comparative Example 1. In addition, the time consumed in Step 3 in Examples 1 and 2 is relatively short, which is 28 minutes and 33 minutes, respectively, and the total time consumed in Examples 1 and 2 is approximately 100 minutes shorter than the total time consumed in Comparative Example 1. This can demonstrate that the charging method designed in this solution enables the secondary battery to have a capacity utilization comparable to the capacity utilization in the comparative example while significantly shortening the charging time of the secondary battery. To be specific, there is almost no impact on the capacity utilization of the secondary battery.

Similarly, the data presented in each group of comparative examples and examples in Table 1 and Table 2 are all similar to the data and trends in Comparative Example 1, Example 1, and Example 2 described above, which are not described herein again.

From the above analysis, it can be concluded that in the design of this solution, completing the constant-voltage charging after the charging current reaches the target current greater than the first current during the constant-voltage charging process of the secondary battery can significantly shorten the constant-voltage charging time of the secondary battery. Furthermore, in this solution, by performing constant-current charging (with the second current) to the second cutoff voltage in Step 3, the charging method designed in this solution can significantly shorten the charging time of the secondary battery, and causes almost no impact on the capacity utilization of the secondary battery while significantly shortening the charging time of the secondary battery.

The examples under the same conditions in Table 1 and Table 2, such as Example 1 and Example 7, Example 2 and Example 8, Example 3 and Example 9, Example 4 and Example 10, Example 5 and Example 11, as well as Example 6 and Example 12 are compared. In these compared examples, the charging conditions for the secondary battery in the first step and second step are the same, and the second current used in the third step is also the same, but the second cutoff voltage is different. The second cutoff voltages in the examples in Table 1 are 4.2 V, while the second cutoff voltages in the examples in Table 2 are all 4.3 V. Although the charging times in the examples in Table 1 are all less than those in the examples in Table 2 with the same charging conditions in the first and second steps, the difference in charging times is small, which is all within 10 minutes. This indirectly indicates that the majority of the time consumed during the charging process of the secondary battery is concentrated in the later period of the constant-voltage charging stage.

FIG. 4 shows a schematic structural block diagram of a charging apparatus provided by this application. It should be understood that the apparatus corresponds to the method embodiments executed in FIG. 1 to FIG. 3, capable of performing the steps involved in the aforementioned methods. Specific functions of the apparatus may refer to the descriptions above. To avoid repetition, detailed descriptions are appropriately omitted here. The apparatus includes at least one software function module that can be stored in a memory in the form of software or firmware or solidified in an operating system (operating system, OS) of the apparatus. Specifically, the apparatus includes: a charging module 400. The charging module 400 is configured to charge a secondary battery, perform constant-voltage charging on the secondary battery under a condition that a battery voltage of the secondary battery reaches a first cutoff voltage, and terminate the constant-voltage charging when a charging current of the secondary battery reaches a target current; where the target current is greater than a first current, and the first current refers to a current at which a capacity of the secondary battery reaches a fully charged state during constant-voltage charging. A positive electrode active material of the secondary battery includes LiMPO₄, where M includes Mn and Fe elements.

In the technical solution of the embodiments of this application, this solution provides the design in which constant-voltage charging is performed on the secondary battery when the secondary battery is charged to reach the first cutoff voltage, and the constant-voltage charging is terminated when the charging current of the secondary battery reaches a target current greater than the first current. The first current refers to a current at which the secondary battery reaches a fully charged state during constant-voltage charging, and the target current is greater than the first current. To be specific, in this solution, it is determined that this charging stage is completed when the secondary battery is charged to a capacity close to the capacity of the secondary battery in the fully charged state, thereby saving a charging time required to charge the secondary battery from the capacity corresponding to the target current to the fully charged capacity corresponding to the first current. The charging time for charging the secondary battery from the battery capacity corresponding to the target current to the fully charged state corresponding to the first current accounts for most of the time of the entire charging process of the secondary battery. Therefore, the charging method designed in this solution saves the time consumed for charging the secondary battery in a constant-voltage stage, and especially can save a large amount of time required to charge the secondary battery from the battery capacity corresponding to the target current (a current during constant-voltage charging) to the fully charged capacity corresponding to the first current (a cutoff current in the fully charged state) during constant-voltage charging, thereby significantly reducing the constant-voltage charging time of the secondary battery and improving the charging efficiency of the secondary battery.

According to some embodiments of this application, optionally, the charging module 400 is specifically configured to perform first-stage constant-current charging on the secondary battery and terminate the first-stage constant-current charging when the battery voltage of the secondary battery reaches the first cutoff voltage.

According to some embodiments of this application, optionally, the charging module 400 is further configured to, after terminating the constant-voltage charging, perform second-stage constant-current charging on the secondary battery with a second current, and terminate the charging when the battery voltage of the secondary battery reaches a second cutoff voltage.

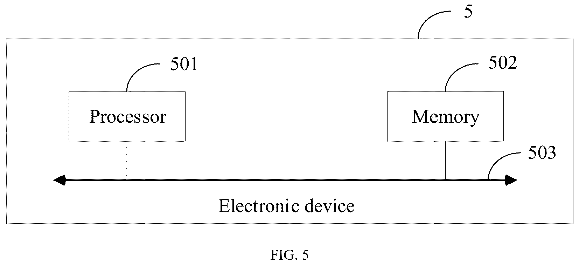

According to some embodiments of this application, as shown in FIG. 5, this application provides an electronic device 5, including: a processor 501 and a memory 502, where the processor 501 and the memory 502 are interconnected and communicate with each other through a communication bus 503 and/or other forms of connection mechanisms (not shown). The memory 502 stores a computer program executable by the processor 501, and when a computing device runs, the processor 501 executes the computer program to perform a method executed by an external device in any optional implementation, such as steps S200 to S210: charging a secondary battery; and under a condition that a battery voltage of the secondary battery reaches a first cutoff voltage, performing constant-voltage charging on the secondary battery, and terminating the constant-voltage charging when a charging current of the secondary battery reaches a target current.

This application provides a computer-readable storage medium, where a computer program is stored in the computer-readable storage medium, and the computer program, when executed by a processor, performs the method in any optional implementation described above.

The storage medium may be implemented by any type of volatile or non-volatile storage device or a combination thereof, such as static random access memory (Static Random Access Memory, SRAM), electrically erasable programmable read-only memory (Electrically Erasable Programmable Read-Only Memory, EEPROM), erasable programmable read-only memory (Erasable Programmable Read-Only Memory, EPROM), programmable read-only memory (Programmable Read-Only Memory, PROM), read-only memory (Read-Only Memory, ROM), magnetic memory, flash memory, magnetic disk, or optical disk.

This application provides a computer program product, where the computer program product, when running on a computer, causes the computer to perform the method in any optional implementation described above.

In conclusion, it should be noted that: the above embodiments are only used to illustrate the technical solutions of this application rather than to limit them; although this application has been described in detail with reference to the foregoing embodiments, those of ordinary skill in the art should understand that: they can still modify the technical solutions recorded in the foregoing embodiments, or perform equivalent replacements on some or all of technical features therein; and these modifications or replacements do not make the essence of the corresponding technical solutions depart from the scope of the technical solutions of the embodiments of this application, and they should all be covered within the scope of the claims and specification of this application. In particular, as long as there is no structural conflict, various technical features mentioned in the embodiments can be combined in any manner. This application is not limited to specific embodiments disclosed in this specification, but includes all technical solutions falling within the scope of the claims.

## Claims

1. A charging method, **characterized by** comprising:
charging a secondary battery; and
under a condition that a battery voltage of the secondary battery reaches a first cutoff voltage, performing constant-voltage charging on the secondary battery, and terminating the constant-voltage charging when a charging current of the secondary current reaches a target current;
wherein the target current is greater than a first current, and the first current refers to a current at which a capacity of the secondary battery reaches a fully charged state during constant-voltage charging;
wherein a positive electrode active material of the secondary battery comprises LiMPO₄, wherein M comprises Mn and Fe elements.

2. The charging method according to claim 1, **characterized in that** the positive electrode material comprises at least one of the following materials:
LiMn_{1-y}Fe_{y}PO₄, wherein y is any value in a range of 0.001 to 0.5;
Li₁₊ₜMn_{1-c}Fe_{c}P_{1-z}R_{z}O₄, wherein t is any value in a range of -0.100 to 0.100, c is any value in a range of 0.001 to 0.500, z is any value in a range of 0.001 to 0.100, and R comprises one or more elements selected from B, S, Si, and N; and
Li_{1+w}CₘMn₁₋ᵤFeᵤP₁₋ₐRₐO₄₋ₙDₙ, wherein C comprises one or more elements selected from Zn, Al, Na, K, Mg, Nb, Mo, and W, R comprises one or more elements selected from B, S, Si, and N, D comprises one or more elements selected from S, F, Cl, and Br, w is any value in a range of -0.100 to 0.100, u is any value in a range of 0.001 to 0.500, a is any value in a range of 0.001 to 0.100, n is any value in a range of 0.001 to 0.1, and m is any value in a range of 0.001 to 0.1.

3. The charging method according to claim 1, **characterized in that** the first cutoff voltage is greater than or equal to a plateau voltage of the Mn element in the secondary battery.

4. The charging method according to claim 3, **characterized in that** the first cutoff voltage is any voltage from 3.97 V to 4.15 V.

5. The charging method according to claim 1, **characterized in that** the performing constant-voltage charging on the secondary battery comprises:
performing constant-voltage charging on the secondary battery with a first charging voltage, wherein a voltage difference range between the first charging voltage and the first cutoff voltage comprises any voltage difference range of: -0.1 V to 0.1 V, 0 V to 0.1 V, and -0.1 V to 0 V.

6. The charging method according to claim 1, **characterized in that** the target current comprises any current in a current range of 0.03C to 0.1C.

7. The charging method according to claim 1, **characterized in that** the charging a secondary battery comprises: performing first-stage constant-current charging on the secondary battery, and terminating the first-stage constant-current charging when a charging voltage of the secondary battery reaches the first cutoff voltage.

8. The charging method according to claim 7, **characterized in that** a current used for the first-stage constant-current charging comprises any current from 0.1C to 4C.

9. The charging method according to claim 1, **characterized in that** after terminating the constant-voltage charging, the method further comprises:
performing second-stage constant-current charging on the secondary battery with a second current and terminating the charging when a battery voltage of the secondary battery reaches a second cutoff voltage.

10. The charging method according to claim 9, **characterized in that** the second cutoff voltage is greater than the first cutoff voltage.

11. The charging method according to claim 10, **characterized in that** a second voltage difference range between the second cutoff voltage and the first cutoff voltage comprises any voltage difference range of: 0.1 V to 0.3 V, 0.2 V to 0.3 V, and 0.1 V to 0.2 V.

12. The charging method according to claim 10, **characterized in that** the second cutoff voltage comprises any voltage from 4.1 V to 4.3 V.

13. The charging method according to claim 11, **characterized in that** the second current comprises any current from 0.01C to 0.1C.

14. The charging method according to claim 1, **characterized in that** the first current comprises any current from 0.01C to 0.02C.

15. The charging method according to claim 1, **characterized in that** a corresponding battery capacity difference range between the target current and the first current comprises 4% to 10%.

16. The charging method according to claim 1, **characterized in that** the first current refers to a current at which the capacity of the secondary battery reaches a fully charged state during constant-voltage charging under a same charging condition for performing the constant-voltage charging on the secondary battery to reach the target current.

17. A charging apparatus, **characterized in that** the apparatus comprises a charging module;
wherein the charging module is configured to charge a secondary battery according to the method described in any one of claims 1 to 16; and
a positive electrode active material of the secondary battery comprises LiMPO₄, wherein M comprises Mn and Fe elements.

18. An electronic device, comprising a memory and a processor, wherein the memory has a computer program stored therein; and the electronic device is **characterized in that** the processor, when executing the computer program, implements the method described in any one of claims 1 to 16.

19. A computer-readable storage medium, having a computer program stored therein and **characterized in that** the computer program, when executed by a processor, implements the method described in any one of claims 1 to 16.
